# EUROPEAN PATENT SPECIFICATION

(11) **EP 2 116 398 B1**
(45) Date of publication and mention of the grant of the patent: **07.03.2012**
(21) Application number: 08703218.1
(22) Date of filing: 15.01.2008
(51) Int. Cl.: B60C 9/09, B60C 15/06

(54) **PNEUMATIC TIRE**
LUFTREIFEN
PNEU

(30) Priority: 06.02.2007 JP 2007027202
(43) Date of publication of application: 11.11.2009
(73) Proprietor: Bridgestone Corporation, Tokyo 104-0031 (JP)
(72) Inventor: FUKUSHIMA, Masaharu, Kodaira-shi Tokyo 187-0031 (JP)
(74) Representative: Whalley, Kevin
(86) International application number: PCT/JP2008/050354
(87) International publication number: WO 2008/096573

(56) References cited:
- FR-A1- 2 840 562
- JP-A- 03 090 405
- JP-A- 2001 018 619
- JP-A- 2002 500 123
- JP-A- 2004 527 417
- US-A- 5 415 216
- US-A1- 2004 103 969
- US-B1- 6 443 204

## Description

### Technical Field

The present invention relates to a pneumatic tire (hereinafter, referred also to simply as "tire") and, more specifically, to a heavy loading pneumatic tire used for construction vehicles or the like.

### Background Art

In the related art, a heavy loading pneumatic radial tire used for construction vehicles or the like has a problem such that swinging or the like occurs on a vehicle during operation such as loading or unloading, or dislodging of load when being mounted on the construction vehicle, so that there arises a problem of degradation of workability.

In contrast, an attempt is made to improve the stability by providing a reinforcing layer on the outside of a carcass which constitutes a framework of the tire and, for example, in Patent Document 1, a pneumatic tire in which the stability of the vehicle is improved without reducing the ride comfort property when used by being mounted on the construction vehicle or the like by disposing predetermined reinforcing layers on the carcass on the outsides of the tire in the axial direction and on the insides of the tire in the radial direction respectively is disclosed.
Patent Document 1: Japanese Unexamined Patent Application Publication No.2005-313764 (Claims, and so on)

Further pneumatic types according to the preamble of claim 1 are known from US-B1-6443204 and US-A1-5415216.

### Disclosure of Invention

### Problems to be Solved by the Invention

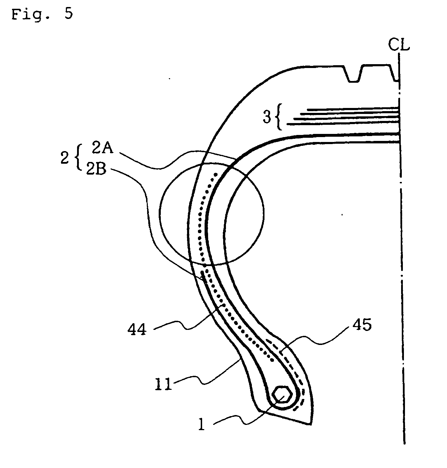

However, in the tire of the structure in which the reinforcing layer is arranged on the outside of the carcass as in the related art, there is a case where part of a cord of the reinforcing layer is broken in so-called a flexible zone (portion surrounded by a circle in Fig. 5) which corresponds to an upper portion of a folded-back carcass ply end and hence a failure is resulted, which constitutes a matter of concern.

Accordingly, it is an object of the present invention to provide a pneumatic tire, specifically, a heavy loading pneumatic tire suitably used in a construction vehicle or the like, in which attainment of durability of a reinforcing layer and improvement of stability of a vehicle are both achieved while restraining degradation of ride comfort,

The inventor has found the following facts after having devoted himself to study.

In other words, the rigidity of the tire which affects the stability of the vehicle can be decomposed into a vertical spring, a widthwise spring, and a lengthwise spring, and the stability is improved by enhancing the respective springs. However, since the ride comfort is degraded if the vertical spring is enhanced too much, it is desirable to enhance mainly the widthwise spring or the lengthwise spring. In contrast, as described above, a method of improving the rigidity of mainly the lengthwise spring by restraining the lengthwise deformation of the carcass by arranging a reinforcing layer having an angle on a side wall portion of the carcass is invented as a technology in the related art, and in that case, although the rigidity can be improved effectively by arranging the reinforcing layer on the outside of the carcass, there arises a problem such that part of a cord of the reinforcing layer is broken in a flexible zone (upper portion with respect to the folded-back carcass ply end).

After having devoted himself to study the problems as described above, the inventor has found that the magnitude of contribution of the position of arrangement of the reinforcing layer to the rigidity of the tire is in order of (1) bead portion, (2) side portion, and (3) buttress portion and, from this, hit upon the fact that the durability and the rigidity are both achieved by not arranging the reinforcing layer on a zone from the side portion to the buttress portion which corresponds to the flexible zone, while arranging the reinforcing layer on a zone from the bead portion to the side portion, on the inside of the carcass as well, which produces a high degree of effectiveness for the improvement of rigidity and is free from the problem of breakage, whereby the present invention is completed.

In other words, the pneumatic tire according to the present invention includes at least one layer of carcass having a body portion folded back around bead cores embedded respectively in a pair of bead portions from the inside to the outside and engaged therewith and extending in a toroidal shape between the bead cores and a folded-back portion provided continuously from the body portion and folded back around the bead cores, and at least one layer of belt arranged on the carcass on the outside of the tire in the radial direction,
wherein at least one layer of outer side reinforcing layer is disposed on the body portion of the carcass on the outside of the tire in the axial direction from a position of 42 to 48% of the tire cross-section height to a position of 10 to 16% of the tire cross-section height along the body portion, and
at least one layer of inner side reinforcing layer is disposed on the body portion of the carcass on the inside of the tire in the axial direction from a position of 42 to 48% of the tire cross-section height to a position not higher than a bottom surface of the bead core along the body portion.

In the present invention, preferably, the cord strength of a cord which constitutes the inner side reinforcing layer and the outer side reinforcing layer is 200N or higher. Also, preferably, the inclination angle of the cord which constitutes the inner side reinforcing layer and the outer side reinforcing layer is within a range from 20 to 60° with respect to the radial direction of the tire. Also, in the present invention, preferably, a cut end of the cord which constitutes the inner side reinforcing layer and the outer side reinforcing layer is coated with covering rubber.

### Advantages

According to the present invention, realization of a pneumatic tire in which attainment of durability of a reinforcing layer and improvement of stability of a vehicle are both achieved while restraining degradation of ride comfort is achieved. The pneumatic tire according to the present invention is specifically preferable as a heavy loading pneumatic tire used for construction vehicles or the like.

### Brief Description of Drawings

Fig. 1 is a partial cross-sectional view showing a pneumatic tire according to an embodiment of the present invention.
Fig. 2 is an explanatory drawing showing an inclination angle of a cord which constitutes an outer side reinforcing layer.
Fig. 3 is a partial cross-sectional view showing the pneumatic tire according to Examples 1 and 3.
Fig. 4 is a partial cross-sectional view showing the pneumatic tire according to Example 2.
Fig. 5 is a partial cross-sectional view showing the pneumatic tire according to Conventional Example 2. Reference Numerals
   1 bead core
   2 carcass
   2A body portion
   2B folded-back portion
   3 belt
   4, 24, 34, 44 outer side reinforcing layer
   5, 25, 35 inner side reinforcing layer
   6 tread
   11 bead portion
   12 crown portion
   13 side wall portion
   45 bead portion reinforcing layer

### Best Modes for Carrying Out the Invention

Preferable embodiments of the present invention will be described below in detail.

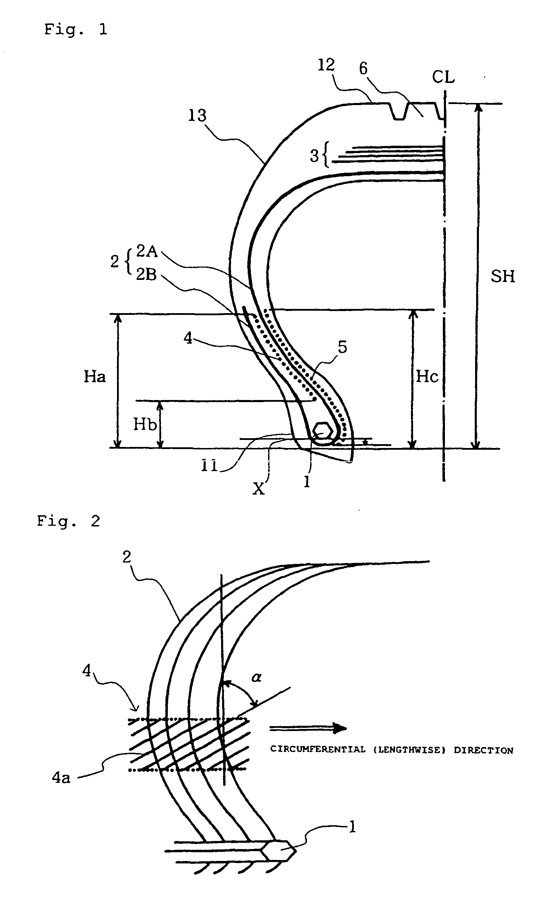

Fig. 1 shows partial cross-sectional view of a pneumatic tire according to a preferable embodiment of the present invention. As shown in the drawing, the tire in the present invention includes a carcass 2 having a body portion 2A folded back around bead cores 1 embedded respectively in a pair of bead portions 11 from inside to outside and engaged therewith and extending in a toroidal shape between the bead cores 1 and a folded-back portion 2B provided continuously from the body portion 2A and folded back around the bead cores 1, and a belt 3 arranged on the outside of the tire in the radial direction.

In the present invention, outer side reinforcing layers 4 are disposed on the body portion 2A of the carcass as described above on the outsides of the tire in the axial direction along the body portion 2A. The outer side reinforcing layers 4 are needed to be disposed in ranges from a position of 42 to 48% of the tire cross-sectional height SH (the cross-sectional height indicated by a reference sign Ha in the drawing) to a position of 10 to 16% of the tire cross-section height SH (the cross-sectional height indicated by a reference sign Hb in the drawing). If upper end positions of the outer side reinforcing layers 4 are higher than the range described above, the cord durability of the reinforcing layers is impaired, while if lower end positions of the same are lower than the range described above, they come into contact with the bead cores 1 or the like and the durability is impaired. Here, the tire cross-section height SH means 1/2 of the difference between the outer diameter of the tire mounted on an application rim and filled with air to a prescribed air pressure and being applied with no-load and the rim diameter. The application rim means a rim prescribed in the following standard, and a prescribed air pressure means an air pressure prescribed corresponding to a maximum load capacity under the following standard. In addition, the standard is specified by an industrial standard effective in region in which the tires are manufactured or used and, for example, it corresponds to "Year Book from The Tire and Rim Association Inc." in the United States of America, and "Standards Manual from The European Tire and Rim Technical Organization" in Europe, and "JATMA Year book" from Japan Automobile Tire Manufactures Association.

In the present invention, inner side reinforcing layers 5 are disposed on the body portion 2A of the carcass 2 on the insides of the tire in the axial direction along the body portion 2A. The inner side reinforcing layers 5 are needed to be disposed in ranges from a position of 42 to 48% of the tire cross-section height SH (the cross-sectional height indicated by a reference sign Hc in the drawing) to positions not higher than bottom surfaces of the bead cores 1 (the cross-sectional height indicated by a reference sign X in the drawing). If upper end positions of the inner side reinforcing layers 5 are higher than the above-described range, the vertical spring is enhanced, while if lower end positions are higher than the above-described range, the rigidity improving effect is reduced.

The outer side reinforcing layers 4 and the inner side reinforcing layers 5 are both formed of a compound material including a cord and rubber, and the cord may be exemplified by a steel cord, an organic fiber cord such as polyamide (nylon (registered trademark)), aramid fiber (Kevler (registered trademark)) and, preferably, nylon may be used. As the rubber, for example, acrylonitrile-butadiene copolymer rubber (NBR), acrylonitrile-styrene-butadiene copolymer rubber (NSBR), styrene-butadiene rubber (SBR), butadiene rubber (BR), natural rubber (NR), isoprene rubber (IR), styrene isoprene rubber (SIR), styrene-isoprene-butadiene rubber (SIBR), butyl rubber (IIR), halogenated butyl rubber (Hal-IIR) may be used.

Also, as shown in Fig. 2, cords 4a which constitute the outer side reinforcing layers 4 are preferably inclined with respect to the radial direction of the tire, and the inclination angle α is preferably within the range from 20 to 60° with respect to the radial direction of the tire. Also, the cord strength is preferably 200N or higher, and more preferably, is 200 to 1500N.

Although not shown, the cords which constitute the inner side reinforcing layers 5 are preferably inclined with respect to the radial direction of the tire as in the case of the outer side reinforcing layers 4, and the inclination angle is preferably within the range from 20 to 60° with respect to the radial direction of the tire. Also, the cord strength is preferably 200N or higher, and more preferably, is 200 to 1500N.

By arranging the outer side reinforcing layers 4 and the inner side reinforcing layers 5 which satisfy the conditions described above in the predetermined range as described above, the effect of the present invention can be obtained further satisfactorily.

In the present invention, although the outer side reinforcing layers 4 and the inner side reinforcing layers 5 are both a single layer in the example shown in the drawing, they may be disposed as two or more layers, and are not limited specifically. When providing a plurality of layers of the outer side reinforcing layer 4 and the inner side reinforcing layer 5, a higher degree of effects are achieved by arranging the same so as to cross each other in both cases.

Also, in the present invention, cut ends of the cords which constitute the outer side reinforcing layers 4 and the inner side reinforcing layers 5 are preferably coated with covering rubber and, more preferably, are coated with rubber of the same kind as the rubber which constitutes the respective reinforcing layers. By coating upper ends and lower ends of the outer side reinforcing layers 4 and the inner side reinforcing layers 5 with the covering rubber respectively, occurrence of a separation failure caused by the ends of the respective reinforcing layers can effectively be prevented.

In addition, in the present invention, particularly, it is preferable that the inclination angles of the codes which constitute the outer side reinforcing layers 4 and the inner side reinforcing layers 5 are substantially the same and the directions of the cords cross each other, and that the cord strengths of the cords which constitute the outer side reinforcing layers 4 and the inner side reinforcing layers 5 are substantially the same. The term "substantially the same" here means that the allowance of the inclination angle of the cord or of the cord strength is within a range of ± 20%. Therefore, as regards the outer side reinforcing layers 4 and the inner side reinforcing layers 5, it can be said to be preferable to manufacture the cords of the same type by embedding at the same inclination angle and disposing the same in such a manner that the cord directions cross each other.

In the pneumatic tire according to the present invention, the above-described conditions must simply be satisfied as regards the outer side reinforcing layers 4 and the inner side reinforcing layers 5, whereby the intended effect of the present invention is achieved, so that the structure, the material, or the like of the tire other than that must simply be configured as needed according to the usual manner and are not specifically limited.

For example, the carcass 2 extends from a crown portion 12 to the bead portions 11 via side wall portions 13 to reinforce these portions respectively, and a folded-back ends thereof are preferably positions within the range of 40 to 60% of the tire cross-section height SH. Although the carcass 2 is provided as one layer in the example shown in the drawing, it may be provided as two or more layers, and is not specifically limited. The belt 3 is provided on the crown portion of the carcass 2 on the outside of the tire in the radial direction and is provided in the form of at least one layer and four layers in the example shown in the drawing. In addition, in the crown portion 12, a tread 6 formed of rubber material into an annular shape and treaded on a road surface, and a tread pattern is formed on the surface of the tread 6 as needed. In addition, an inner liner (not shown) is arranged in an innermost layer of the tire.

The pneumatic tire according to the present invention is specifically preferable as a heavy loading pneumatic radial tire used for construction vehicles or construction machines or the like.

### Examples

On the basis of examples, the present invention will be described further in detail.

### <Example 1>

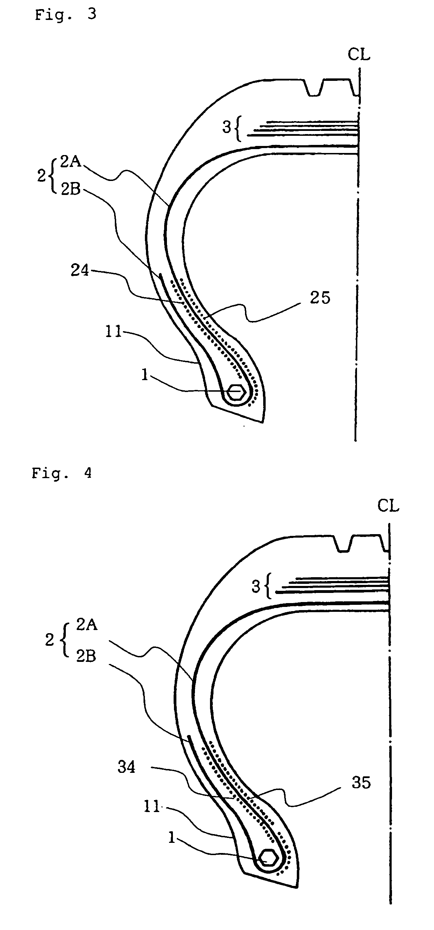

As shown in Fig. 3, in the pneumatic tire including a single-layer steel radial carcass 2 having a body portion 2A folded back around bead cores 1 embedded respectively in a pair of bead portions 11 from the inside to the outside and engaged therewith and extending in a toroidal shape between the bead cores 1 and a folded-back portion 2B provided continuously from the body portion and folded back around the bead cores 1, and a four-layer steel belt 3 arranged on the outside of the tire in the radial direction, outer side reinforcing layers 24 and inner side reinforcing layers 25 were disposed on the body portion 2A of the carcass on the outsides and insides of the tire in the axial direction under the conditions as shown in Table 1 given below respectively, so that the pneumatic tire according to Example 1 was manufactured.

### <Example 2>

As shown in Fig. 4, a pneumatic tire according to Example 2 was manufactured under the conditions shown in Table 1 in the same manner as Example 1 except that the positions of arrangement of outer side reinforcing layers 34 and inner side reinforcing layers 35 were changed. The inner side reinforcing layers 35 in this case are disposed by being divided.

### <Example 3>

A pneumatic tire according to Example 3 was manufactured in the same manner as Example 1 except that the conditions of arrangement of the inner side reinforcing layers 25 are changed according to Table 1 shown below.

### <Conventional Example 1>

A pneumatic tire according to Conventional Example 1 was manufactured in the same manner as Example 1 except that the outer side reinforcing layers and the inner side reinforcing layers were not disposed (not shown).

### <Conventional Example 2>

As shown in Fig. 5, a pneumatic tire according to Conventional Example 2 was manufactured under the conditions shown in Table 1 in the same manner as Example 1 except that only outer side reinforcing layers 44 were disposed and the inner side reinforcing layers were not disposed. The reference numeral 45 designates a bead portion reinforcing layer.

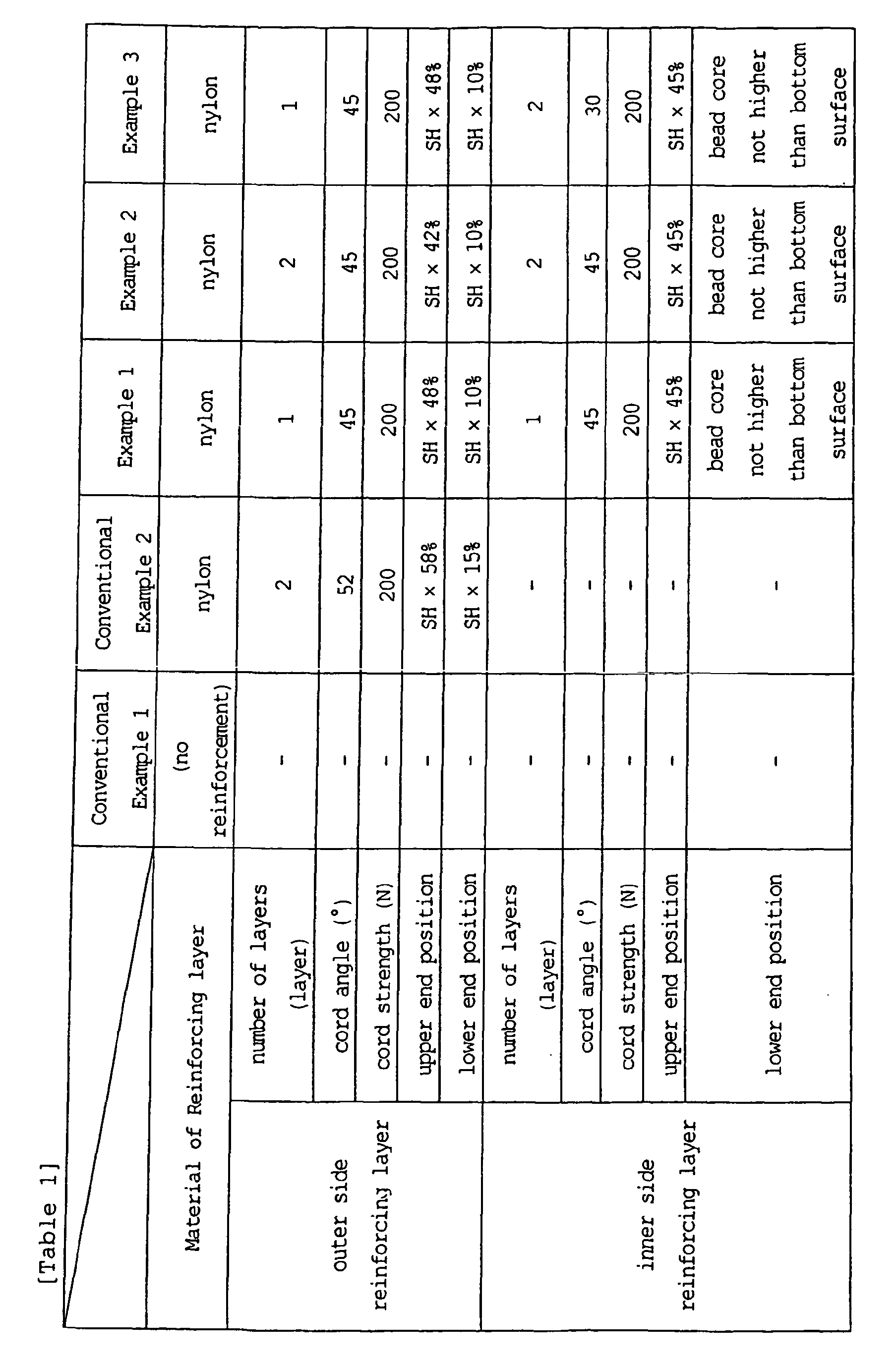

### <Drum Durability Test>

An internal pressure 500 kPa was filled in tires under test in the respective Examples and Conventional Examples, a load of 18.2 ton is applied, and Drum Durability Test was conducted under the conditions of a camber angle of 0° and a slip angle of 0°. The size of the tires was 23.5 R25.

As a result, cord breakage was occurred in the tire under test in Conventional Example 2 in 44 hours, while the cord breakage was not occurred in the tires under test according to Examples 1 to 3 even in 73 hours. A failure in the bead portion was occurred in the tire under test in Conventional Example 1 in 74 hours.

### <Rigidity Test>

An internal pressure 500 kPa was filled in tires under test in the respective Examples and Conventional Examples, a load of 18.2 ton is applied, and the lengthwise spring was evaluated. The size of the tires was 20.5 R25. The result is shown in Table 2 below with index numbers with respect to Conventional Example 1, which is expressed as 100. The larger the value, the better the result is.

### <Evaluation of Stability>

Regarding the tire under test in the respective Examples and Conventional Examples, the stability at the time when being mounted on a vehicle is evaluated by a ride-on-vehicle feeling test. The result is shown in Table 2 below based on a scale of 10. The higher the point, the better the stability becomes.

### <Ride Comfort Evaluation>

Regarding the tire under test in the respective Examples and Conventional Examples, the ride comfort is evaluated by the ride-on-vehicle feeling test. The result is shown in Table 2 below based on a scale of 10. The higher the point, the better the ride comfort becomes.

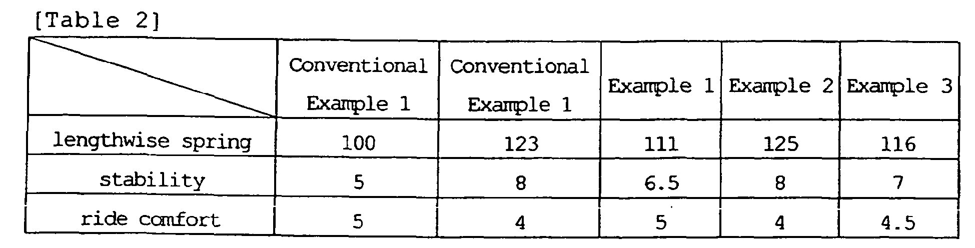

It is apparent from the evaluation result described above that in the tires under test in the respective Examples, the stability of the vehicle was improved while the durability of the reinforcing layers was secured.

## Claims

1. A pneumatic tire comprising: at least one layer of carcass (2) having a body portion (2A) folded back around bead cores (1) embedded respectively in a pair of bead portions (11) from the inside to the outside and engaged therewith and extending in a toroidal shape between the bead cores (1) and a folded-back portion (2B) provided continuously from the body portion (2A) and folded back around the bead cores (1), at least one layer of belt (3) arranged on the carcass (2) on the outside of the tire in the radial direction,
wherein at least one layer of outer side reinforcing layer (4,24,34,44) is disposed on the body portion (2A) of the carcass (2) on the outside of the tire in the axial direction and
at least one layer of inner side reinforcing layer (5,25,35) is disposed on the body portion (2A) of the carcass (2) on the inside of the tire in the axial direction **characterized in that** said at least one layer at outerside reinforming layer (4,24,34,44) is disposed from a position of 42 to 48% (Ha) of the tire cross-section height (SH) to a position of 10 to 16% (Hb) of the tire cross-section height (SH) along the body portion (2A), and said at least one layer of inner side reinforming layer (5,25,35) is disposed from a position of 42 to 48% (Hc) of the tire cross-section height (SH) to a position not higher than a bttom surface (X) of the bead core (1) along the body portion (2A).

2. The pneumatic tire according to Claim 1, wherein the cord strength of a cord which constitutes the inner side reinforcing layer (5,25,35) and the outer side reinforcing layer (4,24,34,44) is 200N or higher.

3. The pneumatic tire according to Claim 1, wherein the inclination angle of the cord which constitutes the inner side reinforcing layer (5,25,35) and the outer side reinforcing layer (4,24,34,44) is within a range from 20 to 60° with respect to the radial direction of the tire.

4. The pneumatic tire according to Claim 1, wherein a cut end of the cord which constitutes the inner side reinforcing (5,25,35) layer and the outer side reinforcing layer (4,24,34,44) is coated with covering rubber.

## Patentansprüche

1. Luftreifen, der Folgendes umfasst: wenigstens eine Karkassenlage (2) mit einem Körperabschnitt (2A), der um Wulstkerne (1) herum gefaltet ist, die von der Innenseite zur Außenseite jeweils in einem Paar Wulstabschnitten (11) eingebettet und in Eingriff sind und ringförmig zwischen den Wulstkernen (1) und dem zurückgefalteten Abschnitt (2B) verlaufen, der vom Körperabschnitt (2A) kontinuierlich vorgesehen und um die Wulstkerne (1) herum gefaltet ist, und wenigstens eine Gürtellage (3), die auf der Karkasse (2) auf der Außenseite des Reifens in radialer Richtung angeordnet ist, wobei
wenigstens eine Lage einer außenseitigen Verstärkungslage (4, 24, 34, 44) auf dem Körperabschnitt (2A) der Karkasse (2) auf der Außenseite des Reifens in axialer Richtung angeordnet ist, und
wenigstens eine Lage einer innenseitigen Verstärkungslage (5, 25, 35) auf dem Körperabschnitt (2A) der Karkasse (2) auf der Innenseite des Reifens in axialer Richtung angeordnet ist,
**dadurch gekennzeichnet, dass** die wenigstens eine Lage einer außenseitigen Verstärkungslage (4, 24, 34, 44) von einer Position von 42 bis 48% (Ha) der Reifenquerschnittshöhe (SH) bis zu einer Position von 10 bis 16% (Hb) der Reifenquerschnittshöhe (SH) entlang dem Körperabschnitt (2A) angeordnet ist und die wenigstens eine Lage einer innenseitigen Verstärkungslage (5, 25, 35) von einer Position von 42 bis 48% (Hc) der Reifenquerschnittshöhe (SH) bis zu einer Position angeordnet ist, die nicht höher ist als eine Bodenfläche (X) des Wulstkerns (1) entlang dem Körperabschnitt (2A).

2. Luftreifen nach Anspruch 1, wobei die Kordfestigkeit eines Kords, der die innenseitige Verstärkungslage (5, 25, 35) und die außenseitige Verstärkungslage (4, 24, 34, 44) bildet, 200N oder höher ist.

3. Luftreifen nach Anspruch 1, wobei der Neigungswinkel des Kords, der die innenseitige Verstärkungslage (5, 25, 35) und die außenseitige Verstärkungslage (4, 24, 34, 44) bildet, in einem Bereich von 20 bis 60° mit Bezug auf die Radialrichtung des Reifens ist.

4. Luftreifen nach Anspruch 1, wobei ein Schnittende des Kords, der die innenseitige Verstärkungslage (5, 25, 35) und die außenseitige Verstärkungslage (4, 24, 34, 44) bildet, mit einem Gummibelag beschichtet ist.

## Revendications

1. Bandage pneumatique, comprenant : au moins une couche de carcasse (2), comportant une partie de corps (2A) repliée vers l'arrière autour de tringles (1), noyées respectivement dans une paire de parties de talon (11), de l'intérieur vers l'extérieur, engagée dans celles-ci et s'étendant en une forme toroïdale entre les tringles (1), et une partie repliée vers l'arrière (2B), s'étendant en continu à partir de la partie de corps (2A) et repliée vers l'arrière autour des tringles (1), et au moins une couche de ceinture (3) agencée sur la carcasse (2), sur l'extérieur du bandage pneumatique, dans la direction radiale ;
au moins une nappe d'une couche de renforcement latérale externe (4, 24, 34, 44) étant agencée sur la partie de corps (2A) de la carcasse (2), sur l'extérieur du bandage pneumatique, dans la direction axiale ; et
au moins une nappe d'une couche de renforcement latérale interne (5, 25, 35) étant agencée sur la partie de corps (2A) de la carcasse (2), sur l'intérieur du bandage pneumatique, dans la direction axiale, **caractérisé en ce que** ladite au moins une nappe de la couche de renforcement latérale externe (4, 24, 34, 44) s'étend d'une position représentant 42 à 48% (Ha) de la hauteur de la section transversale (SH) vers une position représentant 10 à 16% (Hb) de la hauteur de la section transversale du bandage pneumatique (SH), le long de la partie de corps (2A), ladite au moins une nappe de la couche de renforcement latérale interne (5, 25 35) s'étendant d'une position représentant 42 à 48% (Hc) de la hauteur de la section transversale (SH) du bandage pneumatique vers une position située en un point pas plus élevé qu'une surface inférieure (X) de la tringle (1), le long de la partie de corps (2A).

2. Bandage pneumatique selon la revendication 1, dans lequel la résistance de câblé d'un câblé constituant la couche de renforcement latérale interne (5, 25, 35) et la couche de renforcement latérale externe (4, 24, 34, 44) correspond à 200N ou plus.

3. Bandage pneumatique selon 1a revendication 1, dans lequel l'angle d'inclinaison du câblé constituant la couche de renforcement latérale interne (5, 25, 35) et la couche de renforcement externe (4, 24, 34, 44) est compris dans un intervalle allant de 20 à 60° par rapport à la direction radiale du bandage pneumatique.

4. Bandage pneumatique selon la revendication 1, dans lequel une extrémité coupée du câblé constituant la couche de renforcement latérale interne (5, 25, 35) et la couche de renforcement latérale externe (4, 24, 34, 44) est revêtue d'une gomme de revêtement.
